# EUROPEAN PATENT APPLICATION

(11) **EP 4 611 139 A1**
(43) Date of publication of application: **03.09.2025**
(21) Application number: 24221365.0
(22) Date of filing: 19.12.2024
(51) Int. Cl.: H01M 50/209, H01M 50/211, H01M 50/271

(54) **BATTERY MODULE INCLUDING MODULE CASE AND BATTERY PACK INCLUDING BATTERY MODULE**

(30) Priority: 29.02.2024 KR 20240029828
(71) Applicant: SK On Co., Ltd., Seoul 03161 (KR)
(72) Inventor: KANG, In Seob, Daejeon 34124 (KR); KANG, Ji Eun, Daejeon 34124 (KR); KIM, Eun Young, Daejeon 34124 (KR); YOO, Tak Kyung, Daejeon 34124 (KR); LEE, Hee Jin, Daejeon 34124 (KR); JO, Soo Hwan, Daejeon 34124 (KR)
(74) Representative: Prüfer & Partner mbB Patentanwälte · Rechtsanwälte

(57) **Abstract**

A battery module includes a cell assembly including a plurality of battery cells, and a module case accommodating the cell assembly. The module case includes an accommodation portion including a main plate supporting the cell assembly and a sidewall extending from the main plate, a module cover including an upper plate covering the cell assembly, the upper plate having a first surface oriented in a first direction, a sidewall cover extending from the upper plate, the sidewall cover covering a portion of the sidewall, the sidewall cover having a second surface oriented in a second direction opposite to the first direction, and a guide groove formed in the second surface, and a first bonding portion connecting the second surface of the sidewall cover and the sidewall to each other.

## Description

### TECHNICAL FIELD

The present disclosure relates to a battery module including a module case and a battery pack including the same.

### BACKGROUND

Unlike primary batteries, secondary batteries may be charged and discharged, and thus may be applied to devices within various fields, such as digital cameras, mobile phones, laptops, hybrid vehicles, electric vehicles, and energy storage systems. Secondary batteries include lithium-ion batteries, nickel-cadmium batteries, nickel-metal hydride batteries, or nickel-hydrogen batteries.

Lithium secondary batteries may be manufactured as pouch-type battery cells having flexibility, prismatic battery cells having rigidity, or cylindrical can-type battery cells. A plurality of battery cells may be stacked to form a cell assembly.

A cell assembly may be disposed in a case to form a battery module, and a plurality of battery modules may be disposed in a pack housing to form a battery pack.

### SUMMARY

A battery module may include a cell assembly and a module case accommodating the cell assembly. The module case may include a plurality of components (for example, a module cover, an accommodation portion, and end plate). The components of the module case may be welded to each other and manufactured. However, when the module cover and the accommodation portion are formed of the same material, a contact surface (for example, a welded portion) between the module cover and the accommodation portion may not be easily detected. During a process of welding the module case, generated heat may be transferred to an unintended point, and the battery module may be damaged. A gap may be formed between the components of the module case, such that the module case may have reduced durability.

According to an aspect of the present disclosure, a battery module may have improved manufacturing convenience.

According to an aspect of the present disclosure, a battery module may prevent damage to a module case and a cell assembly during a welding process.

According to an aspect of the present disclosure, a battery module may have a reduced gap between components of a module case, and may have reduced durability.

A battery module and a battery pack of the present disclosure may be widely applied in the field of green technology, such as to electric vehicles, battery charging stations, and other battery-utilizing solar power generation schemes, wind power generation schemes, or the like. In addition, the battery module and the battery pack of the present disclosure may be used in eco-friendly electric vehicles, hybrid vehicles, or the like, to prevent climate change by mitigating the effects of air pollution and greenhouse gas emissions.

According to an aspect of the present disclosure, there is provided a battery module including a cell assembly including a plurality of battery cells, and a module case accommodating the cell assembly. The module case may include an accommodation portion including a main plate supporting the cell assembly and a sidewall extending from the main plate, a module cover including an upper plate covering the cell assembly, the upper plate having a first surface oriented in a first direction, a sidewall cover extending from the upper plate, the sidewall cover covering a portion of the sidewall, the sidewall cover having a second surface oriented in a second direction opposite to the first direction, and a guide groove formed in the second surface, and a first bonding portion connecting the second surface of the sidewall cover and the sidewall to each other.

The sidewall cover may have a shade forming surface, parallel to the second surface, the shade forming surface forming at least a portion of the guide groove. The shade forming surface may be spaced apart from the first bonding portion.

The sidewall may include a guide region formed by the sidewall cover, the guide region having at least a portion exposed through the guide groove, and an exposed region spaced apart from the guide region, the exposed region not covered by the module cover. The guide region may have a first brightness, and the exposed region may have a second brightness, different from the first brightness.

The first bonding portion may include a plurality of first bonding portions. The guide region may be positioned between the plurality of first bonding portions.

A material of the module cover and a material of the accommodation portion may be the same.

The module case may include an end plate covering at least a portion of the cell assembly, the end plate perpendicular to the sidewall. The main plate may include a first central portion formed to have a first thickness, and a first end portion extending from the first central portion, the first end portion formed to have a second thickness, less than the first thickness. The end plate may include a second central portion formed to have a third thickness, and a second end portion extending from the second central portion, the second end portion formed to have a fourth thickness, less than the third thickness. The module case may include a second bonding portion connecting the first end portion and the second end portion to each other.

At least a portion of the first end portion may have a first internal surface opposing the second central portion, and a first bonding surface perpendicular to the first internal surface. The second end portion may have a second internal surface opposing the first central portion, and a second bonding surface perpendicular to the second internal surface and the first bonding surface. The second bonding portion may connect the first bonding surface and the second bonding surface to each other.

The second bonding portion may be formed in a welding direction, inclined with respect to the first bonding surface and the second bonding surface.

The upper plate may include a first end region connected to the sidewall cover, and a second end region perpendicular to the first end region. The module case may include an end plate covering at least a portion of the cell assembly, the end plate perpendicular to the sidewall, and a third bonding portion connecting the second end region of the upper plate and the end plate to each other.

The end plate may have a third surface oriented in the first direction. The third bonding portion may connect the first surface of the upper plate and the third surface of the end plate to each other.

According to another aspect of the present disclosure, there is provided a battery module including a cell assembly including a plurality of battery cells, and a module case accommodating the cell assembly. The module case may include an accommodation portion including a main plate supporting the cell assembly, and a sidewall extending from the main plate, a module cover including an upper plate covering the cell assembly, the upper plate having a first surface oriented in a first direction, and a sidewall cover extending from the upper plate, the sidewall cover covering a portion of the sidewall, the sidewall having a second surface oriented in a second direction opposite to the first direction, an end plate surrounding at least a portion of the cell assembly, the end plate having a third surface oriented in the first direction, a first bonding portion connecting the second surface of the sidewall cover and the sidewall to each other, a second bonding portion connecting the main plate and the end plate to each other, and a third bonding portion connecting the first surface of the upper plate and the third surface of the end plate to each other.

The module cover may include a guide groove formed in the second surface. The sidewall cover may have a shade forming surface, parallel to the second surface, the shade forming surface forming at least a portion of the guide groove. The shade forming surface may be spaced apart from the first bonding portion.

The end plate may be perpendicular to the sidewall. The main plate may include a first central portion formed to have a first thickness, and a first end portion extending from the first central portion, the first end portion formed to have a second thickness, less than the first thickness. The end plate may include a second central portion formed to have a third thickness, and a second end portion extending from the second central portion, the second end portion formed to have a fourth thickness, less than the third thickness. The second bonding portion may connect the first end portion and the second end portion to each other.

At least a portion of the first end portion may have a first internal surface opposing the second central portion, and a first bonding surface perpendicular to the first internal surface. The second end portion may have a second internal surface opposing the first central portion, and a second bonding surface perpendicular to the second internal surface and the first bonding surface. The second bonding portion may connect the first bonding surface and the second bonding surface to each other.

According to another aspect of the present disclosure, there is provided a battery pack including a plurality of battery modules, and a pack frame accommodating the plurality of battery modules. Each of the plurality of battery modules may include a cell assembly including a plurality of battery cells, and a module case accommodating the cell assembly. The module case may include an accommodation portion including a main plate supporting the cell assembly, and a sidewall extending from the main plate, a module cover including an upper plate covering the cell assembly, the upper plate having a first surface oriented in a first direction, a sidewall cover extending from the upper plate, the sidewall cover covering a portion of the sidewall, the sidewall cover having a second surface oriented in a second direction opposite to the first direction, and a guide groove formed in the second surface, and a first bonding portion connecting the second surface of the sidewall cover and the sidewall to each other.

According to an embodiment of the present disclosure, manufacturing convenience of a battery module may be increased during a welding process.

According to an embodiment of the present disclosure, damage to a battery module during a welding process may be prevented.

According to an embodiment of the present disclosure, a gap between components of a module housing may be reduced, and durability of a battery module may be increased.

### BRIEF DESCRIPTION OF DRAWINGS

Certain aspects, features, and advantages of the disclosed technology are illustrated by the following detailed description with reference to the accompanying drawings.
FIG. 1 is a perspective view of a battery cell according to an embodiment.
FIG. 2 is a perspective view of a battery module according to an embodiment.
FIG. 3 is an exploded perspective view of a battery module according to an embodiment.
FIG. 4 is an exploded perspective view of a module case according to an embodiment.
FIG. 5 is a side view of a battery module according to an embodiment.
FIG. 6 is an enlarged view of region "A" of FIG. 5 according to an embodiment.
FIG. 7A is a perspective view of region "B" of FIG. 6 according to an embodiment.
FIG. 7B is a cross-sectional perspective view of region "B" of FIG. 6 according to an embodiment.
FIG. 8 is a cross-sectional view taken along line A-A' of FIG. 2 according to an embodiment.
FIG. 9 is a top view of a battery module according to an embodiment.
FIG. 10 is an exploded perspective view of a battery pack according to an embodiment.

### DETAILED DESCRIPTION

Hereinafter, the present disclosure will be described in detail with reference to the accompanying drawings. However, embodiments are merely exemplary, and the present disclosure is not limited to specific embodiments.

In addition, detailed descriptions of well-known functions and configurations that may obscure the gist of the present disclosure will be omitted. In addition, some components are exaggerated, omitted, or schematically illustrated in the accompanying drawings, and the size of each component does not fully reflect the actual size.

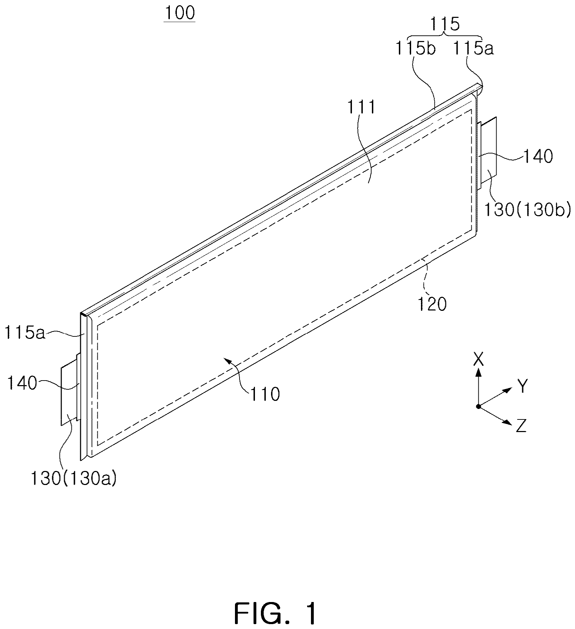

FIG. 1 is a perspective view of a battery cell according to an embodiment.

Referring to FIG. 1, the battery cell 100 may include a pouch 110, an electrode assembly 120, and an electrode tab 130. The battery cell 100 may be a secondary battery. For example, the battery cell 100 may be a lithium-ion battery, but the present disclosure is not limited thereto. For example, the battery cell 100 may be a nickel-cadmium electricity, a nickel-metal hydride battery, or a nickel-hydrogen battery that may be charged and discharged.

The pouch 110 may form at least a portion of an exterior of the battery cell 100. The pouch 110 may include an electrode accommodation portion 111 accommodating the electrode assembly 120, and a sealing portion 115 sealing at least a portion of a circumference of the electrode accommodation portion 111. The electrode accommodation portion 111 may provide a space in which the electrode assembly 120 and an electrolyte are accommodated.

The sealing portion 115 may be formed by bonding of at least a portion of a circumference of the pouch 110. The sealing portion 115 may be in the form of a flange extending outwardly from the electrode accommodation portion 111 that is in the form of a container, and may be disposed along at least a portion of an outer periphery of the electrode accommodation portion 111. In an embodiment, the sealing portion 115 may include a first sealing portion 115a in which the electrode tab 130 is positioned, and a second sealing portion 115b in which the electrode tab 130 is not positioned. A portion of the electrode tab 130 may be withdrawn or exposed to the outside of the pouch 110. In a position in which the electrode tab 130 is drawn out, in order to simultaneously increase a sealing degree of the first sealing portion 115a and ensure an electrical insulation state, the electrode tab 130 may be in a state of being covered by an insulating film 140. The insulating film 140 may be formed of a film material, thinner than that of the electrode tab 130, and may be attached to both surfaces of the electrode tab 130.

The electrode tab 130 may transfer a current of the battery cell 100 to the outside of the battery cell 100. The electrode tab 130 may be connected to the electrode assembly 120.

In an embodiment, the electrode tabs 130 may be disposed at both sides of the battery cell 100 in a length direction (Y-axis direction) to be oriented in opposite directions. For example, the electrode tab 130 may include a first electrode tab 130a (for example, a cathode) having a first polarity (for example, a cathode) toward one side of the battery cell 100 in the length direction, and a second electrode tab 130b having a second polarity (for example, an anode) toward the other side of the battery cell 100 in the length direction. In the embodiment illustrated in FIG. 1, the sealing portion 115 may include two first sealing portions 115a on which the electrode tab 130 is disposed and one second sealing portion 115b on which the electrode tab 130 is not disposed. The first sealing portion 115a may seal at least a portion of the electrode tab 130. In an embodiment, the electrode tab 130 may be referred to as an electrode lead.

A direction in which the electrode tab 130 is positioned may be selectively designed. In an embodiment (for example, FIG. 1), the electrode tab 130 may include the first electrode tab 130a, and the second electrode tab 130b positioned in an opposite direction of the first electrode tab 130a with respect to the electrode assembly 120. In FIG. 1, it is illustrated that the electrode tabs 130 is disposed at both sides of the battery cell 100 in the length direction (for example, the Y-axis direction) to be oriented in opposite directions, but a structure of the electrode tabs 130 is not limited thereto. For example, two electrode tabs 130 may be arranged to be substantially parallel to each other in the length direction (for example, the Y-axis direction) of the battery cell 100.

As illustrated in FIG. 1, the pouch 110 is not limited to having a structure in which the sealing portion 115 is formed on three surfaces obtained by folding one sheet of exterior material.

In an embodiment of the present disclosure, at least a portion of the sealing portion 115 may be in the form of being folded at least once. At least a portion of the sealing portion 115 may be folded, thereby improving bonding reliability of the sealing portion 115 and minimizing an area of the sealing portion 115. The second sealing portion 115b of the sealing portion 115 according to an embodiment, on which the electrode tab 130 is not disposed, may be folded twice and then fixed by an adhesive member (not illustrated). An angle or the number of times the second sealing portion 115b being bent may be changed. For example, in an embodiment not illustrated, the second sealing portion 115b may be folded by 90° with respect to the first sealing portion 115a.

The electrode assembly 120 may include a cathode plate, an anode plate, and a separator. The separator may prevent contact between the cathode plate and the anode plate. It will be understood by those skilled in the art that the electrode assembly 120 may be manufactured using various methods. According to embodiments, a cathode, an anode, and a separator may be repeatedly disposed to form an electrode assembly. In some embodiments, the electrode assembly may be a winding-type electrode assembly, a stacking-type electrode assembly, a Z-folding-type electrode assembly, or a stack-folding-type electrode assembly.

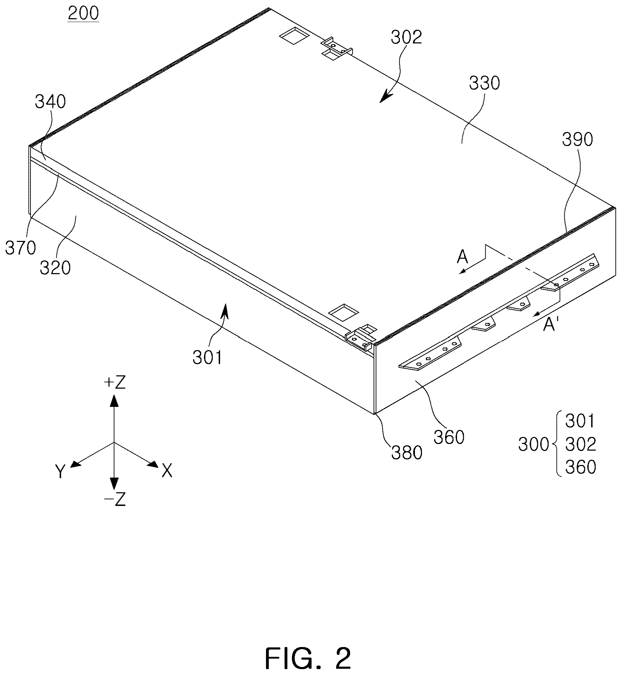

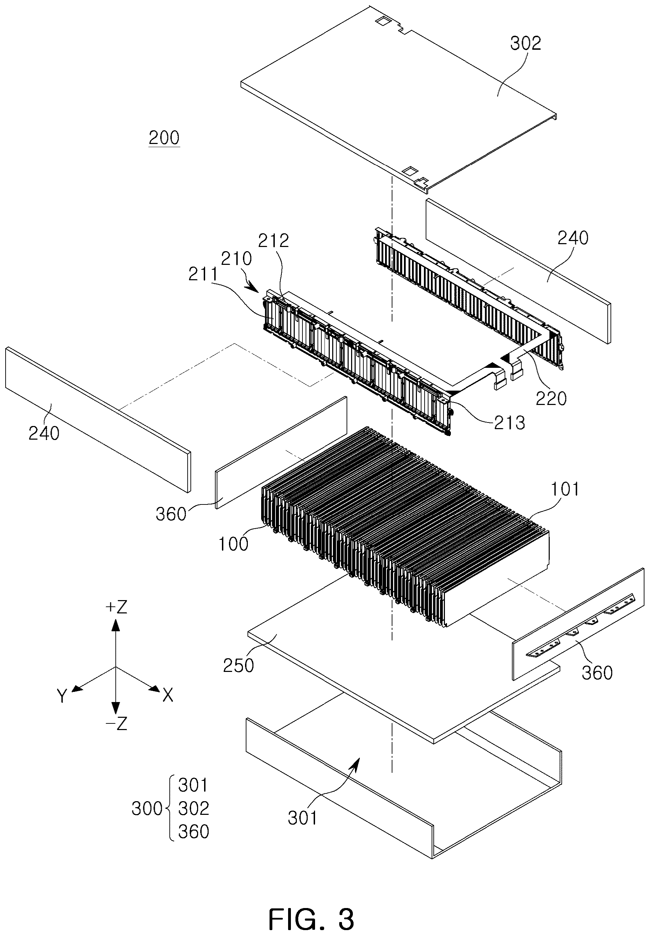

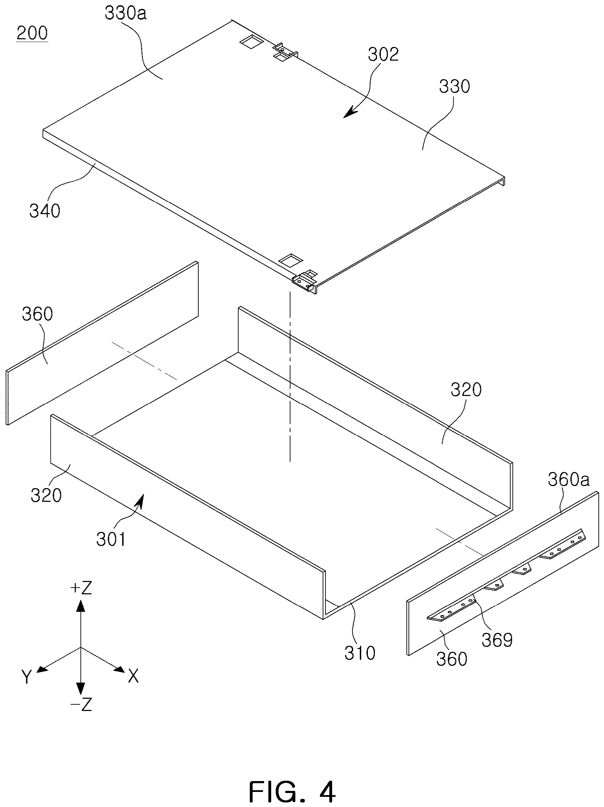

FIG. 2 is a perspective view of a battery module according to an embodiment. FIG. 3 is an exploded perspective view of a battery module according to an embodiment. FIG. 4 is an exploded perspective view of a module case according to an embodiment.

Referring to FIGS. 2, 3, and/or 4, a battery module 200 may include a cell assembly 101, a busbar assembly 210, a sensor assembly 220, an insulating plate 240, and/or a module case 300.

The cell assembly 101 may include a plurality of battery cells 100. The description of the battery cell 100 of FIG. 1 may be applied to the battery cell 100 of FIG. 3.

The cell assembly 101 may have a substantially hexahedral shape. In an embodiment, the cell assembly 101 may be referred to as a cell stack. In an embodiment, the cell assembly 101 may include a plurality of battery cells 100, connected to each other using an adhesive tape. According to an embodiment, the cell assembly 101 may include a heat propagation prevention member positioned between at least some battery cells 100, among the plurality of battery cells 100.

The busbar assembly 210 may include an electrically conductive internal busbar 211 electrically connected to the electrode tab 130 of the battery cell 100, and a busbar frame 212 supporting the internal busbar 211. The busbar frame 212 may be formed of an electrically insulating material (for example, a polymer). The busbar frame 212 may include at least one fastening hole for accommodating a coupling component (for example, a screw, a rivet, and/or a boss structure). The busbar frame 212 may be coupled to the module case 300 using the coupling component. In an embodiment, the internal busbar 211 may be referred to as a busbar. The internal busbar 211 may be provided as a plurality of internal busbars 211. For example, the number of internal busbars 211 may be selectively designed based on the number of battery cells 100, included in the battery module 200.

The busbar assembly 210 may include at least one terminal busbar 213 for electrical connection with the outside. The electrode tab 130 of the battery cell 100 may be electrically connected to the outside of the battery module 200 through the internal busbar 211 and the terminal busbar 213. For example, the terminal busbar 213 may be electrically connected to the internal busbar 211, and current of the battery cell 100 may be transferred to the outside of the battery module 200 through the internal busbar 211 and the terminal busbar 213. The terminal busbar 213 may be exposed to the outside of the module case 300 through a hole 250a of the insulating plate 240. In an embodiment, the terminal busbar 213 may be referred to as a high-voltage busbar or a long busbar.

The sensor assembly 220 may include a sensor, sensing information on the battery module 200. For example, the sensor assembly 220 may include a temperature sensor, sensing a temperature of the battery cell 100, and at least one voltage sensing terminal connected to the internal busbar 211.

The insulating plate 240 may prevent contact between at least a portion (for example, the terminal busbar 213) of the busbar assembly 210 and the module case 300 (for example, the accommodation portion 301). For example, at least a portion of the insulating plate 240 may be disposed between the terminal busbar 213 and a sidewall 320 of the accommodation portion 301. The insulating plate 240 may be formed of an insulating material (for example, a polymer), and may prevent electric communication due to contact between the terminal busbar 213 and the sidewall 320. In an embodiment, the insulating plate 240 may be disposed between the cell assembly 101 and the sidewall 320.

In an embodiment, the battery module 200 may include a heat radiation member 250. The heat radiation member 250 may be positioned between the cell assembly 101 and the accommodation portion 301 (for example, a main plate 310) of the module case 300. The heat radiation member 250 may be a thermal adhesive. At least a portion of heat generated by the battery cell 100 of the cell assembly 101 may be transferred to the accommodation portion 301 through the heat radiation member 250.

The module case 300 may form at least a portion of an exterior of the battery module 200. The module case 300 may accommodate a component (for example, the cell assembly 101) of the battery module 200. For example, the module case 300 may form an accommodation space for accommodating the cell assembly 101 and/or the busbar assembly 210. The module case 300 may protect the cell assembly 101 from external impacts.

The module case 300 may include the main plate 310 supporting the cell assembly 101, and the accommodation portion 301 including the sidewall 320 extending from the main plate 310. In an embodiment, the main plate 310 may be referred to as a lower plate. The cell assembly 101 may be mounted on the main plate 310. The sidewall 320 may cover at least a portion of a side surface of the cell assembly 101. For example, the sidewall 320 may extend from both end portions of the main plate 310 in a first direction (for example, +Z-direction). In an embodiment, the sidewall 320 may be formed integrally with the main plate 310.

The module case 300 may include a module cover 302 covering the cell assembly 101. For example, the module cover 302 may be disposed at one side of the cell assembly 101. The module cover 302 may cover a portion (for example, an upper portion) of the cell assembly 101. The module cover 302 may protect the cell assembly 101 from external impacts of the battery module 200. In an embodiment, the cover 230 may be referred to as an upper cover.

The module cover 302 may include an upper plate 330 covering the cell assembly 101, and a sidewall cover 340 extending from the upper plate 330 in a second direction (for example, -Z-direction). The upper plate 330 may have a first surface 330a oriented in the first direction (for example, +Z-direction). The sidewall cover 340 may extend from both end portions of the upper plate 330 in the second direction (for example, -Z-direction). The sidewall cover 340 may oppose a portion of the sidewall 320 of the accommodating portion 301, and may cover a portion of the sidewall 320.

The module case 300 may be formed of a material that may be bonded using welding. According to an embodiment, the module case 300 may be formed of a material having high thermal conductivity such as metal. For example, the module case 300 may be formed of aluminum or stainless steel. However, the material of the module case 300 is not limited thereto. The module case 300 may be referred to as a battery case, a housing, or a module housing.

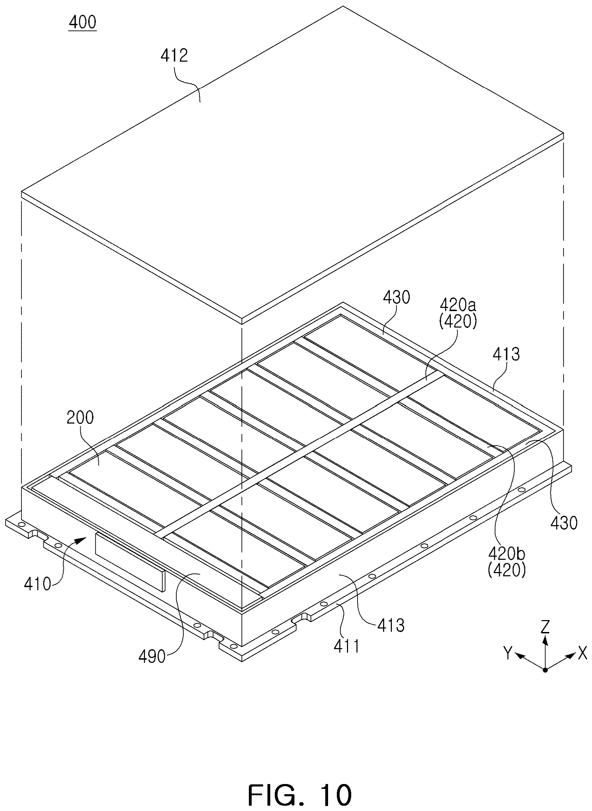

The module case 300 may include an end plate 360. The end plate 360 may surround at least a portion of the cell assembly 101. In an embodiment, the end plate 360 may be connected to the accommodation portion 301 and/or an end portion of the module cover 302 in a length direction (for example, an X-axis direction). The end plate 360 may protect the cell assembly 101 from external impacts of the battery module 200. The end plate 360 may cover a portion of a side surface of the cell assembly 101. In an embodiment, the end plate 360 may include a protrusion portion 369 for coupling to an external structure of the battery module 200 (for example, a pack frame 410 of FIG. 10). The end plate 360 may have a surface (for example, a third surface 360a) oriented in the first direction (for example, a +Z-direction). In an embodiment, the end plate 360 may be referred to as a front case and/or a rear case.

Components of the module case 300 may be coupled to each other using welding. For example, the module case 300 may include a first bonding portion 370 connecting the accommodation portion 301 and the module cover 302 to each other, a second bonding portion 380 connecting the accommodation portion 301 and the end plate 360 to each other, and/or a third bonding portion 390 connecting the module cover 302 and the end plate 360 to each other. In an embodiment, the bonding portion 370, 380, and 390 may be referred to as a welding line or a welding region. The first bonding portion 370, the second bonding portion 380, and the third bonding portion 390 may be formed to be substantially parallel or perpendicular to each other. A coupling structure of the module case 300 using the bonding portion 370, 380, and 390 will be described further below. In another embodiment, the module case 300 may include a fourth bonding portion 360 connecting the sidewall 320 and the end plate 360 of the accommodation portion 301 to each other. A direction in which the fourth bonding portion is arranged may be perpendicular to a direction in which the first bonding portion 370, the second bonding portion 380, and the third bonding portion 390 are arranged.

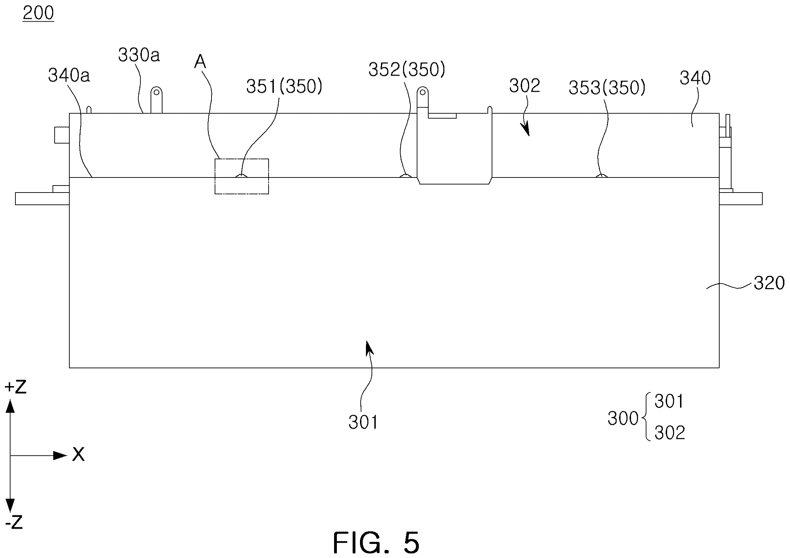

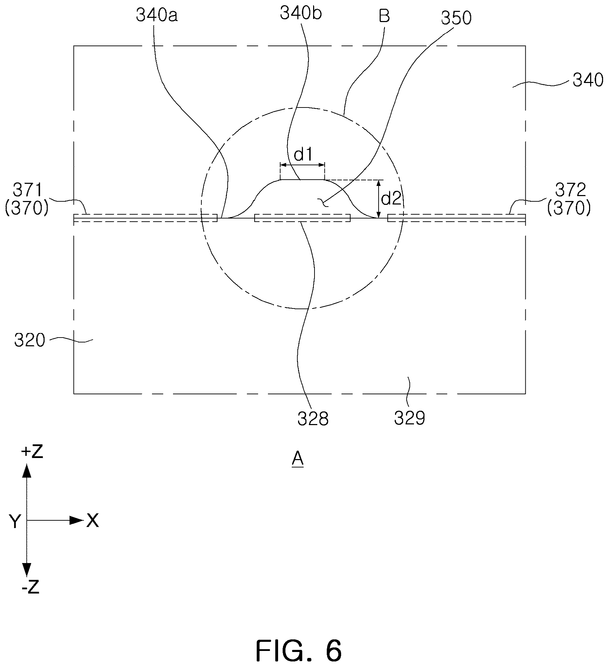

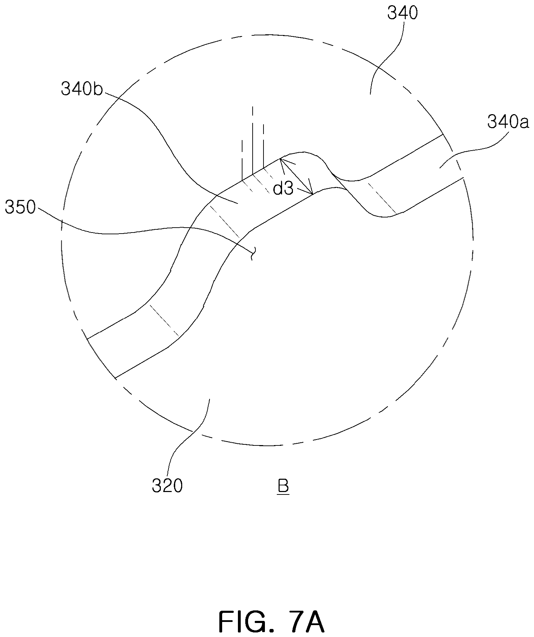

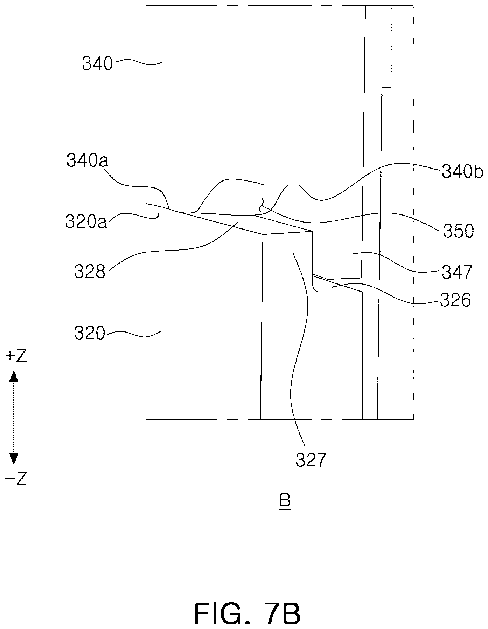

FIG. 5 is a side view of a battery module according to an embodiment. FIG. 6 is an enlarged view of region "A" of FIG. 5 according to an embodiment. FIG. 7A is a perspective view of region "B" of FIG. 6 according to an embodiment. FIG. 7B is a cross-sectional perspective view of region "B" of FIG. 6 according to an embodiment.

Referring to FIGS. 5, 6, 7A, and/or 7B, the battery module 200 may include a module case 300 including an accommodation portion 301 and a module cover 302. At least a portion of the descriptions for the battery module 200, the module case 300, the accommodation portion 301, and the module cover 302 of FIGS. 2, 3, and/or 4 may be applied to the battery module 200, the module case 300, the accommodation portion 301, and the module cover 302 of FIGS. 5, 6, 7A, and/or 7B.

The accommodation portion 301 may be connected to the module cover 302. For example, a sidewall 320 of the accommodation portion 301 may be bonded to a sidewall cover 340 of the module cover 302. A module case 300 may include a first bonding portion 370 connecting the sidewall 320 and the sidewall cover 340 to each other. The upper plate 330 may have a first surface 330a oriented in a first direction (+Z-direction). The sidewall cover 340 may have a second surface 340a oriented in a second direction (-Z-direction). The second surface 340a may extend in a third direction (X-axis direction). The first bonding portion 370 may be welded to the second surface 340a of the sidewall cover 340 and the sidewall 320 of the accommodation portion 301. The first bonding portion 370 may be formed in the third direction (X-axis direction), parallel to the second surface 340a. In an embodiment, the first bonding portion 370 may be referred to as a first welding line or a first welding bead.

Each of the sidewall 320 and the sidewall cover 340 may have a step structure. For example, the sidewall 320 may include a first protruding region 327 having an upper surface 320a oriented in the first direction (+Z-direction), and an internal region 326 positioned in the second direction (-Z-direction) with respect to the first protruding region 327. A portion of the first protruding region 327 may be in contact with the second surface 340a of the sidewall cover 340. For example, a portion of the first protruding region 327 may be bonded to the second surface 340a of the sidewall cover 340 to form a first bonding portion 370. The other portion of the first protruding region 327 may be spaced apart from a portion (for example, a shade forming surface 340b) of the sidewall cover 340 by a guide groove 350. The other portion of the first protruding region 327, spaced apart from the shadow forming surface 340b, may be referred to as a guide region 328. The module cover 340 may be formed to have a shape corresponding to a shape of the sidewall 320. For example, the module cover 340 may include a second protruding region 347 opposing the internal region 326. The second protruding region 347 may further protrude in the second direction (-Z) than the second surface 340a. Each of the sidewall 320 and the sidewall cover 340 may have a protruding structure, thereby improving the ease of assembling the sidewall 320 and the sidewall cover 340. A position of the first bonding portion 370 may be determined based on a contrast difference between the sidewall 320 of the accommodating portion 301 and the sidewall cover 340 of the module cover 302. For example, an operator or a welding robot may sense the sidewall 320 and the sidewall cover 340, and may determine, based on a contrast difference between the sidewall 320 and the sidewall cover 340, a position of the first bonding portion 370. The first bonding portion 370 may be positioned at a boundary between the sidewall 320 and the sidewall cover 340.

In an embodiment, a material of the accommodation portion 301 may be the same as a material of the module cover 302. For example, each of the sidewall 320 of the accommodation portion 301 and the sidewall cover 340 of the module cover 302 may include stainless steel or aluminum.

The module cover 302 may guide, to the operator, a position in which the first bonding portion 370 is to be formed. For example, the module cover 302 may include a guide groove 350. The guide groove 350 may generate a contrast difference between the sidewall 320 and the sidewall cover 340. For example, the guide groove 350 may be formed in the second surface 340a of the sidewall cover 340. For example, the guide groove 350 may be a groove formed in the second surface 340a of the sidewall cover 340. In an embodiment, the sidewall cover 340 may have a shade forming surface 340b parallel to the second surface 340a, the shade forming surface 340b forming at least a portion of the guide groove 350. The shade forming surface 340b may be spaced apart from the first bonding portion 370. The shade forming surface 340b of the sidewall cover 340 may form a shade difference in a portion of the sidewall 320. For example, the sidewall cover 340 in which the guide groove 350 is formed may generate shade in a portion of the sidewall 320. In an embodiment, the sidewall 320 may include a guide region 328 formed by the sidewall cover 340, and an exposed region 329 not covered by the sidewall cover 340. At least a portion of the guide region 328 may be exposed to the outside of the module case 300 through the guide groove 350. A brightness of the guide region 328 may be different from a brightness of the exposed region 329. For example, a first brightness of the guide region 328 may be lower than a second brightness of the exposed region 329 by a shadow formed by the sidewall cover 340. The operator may set, based on a brightness difference between the guide region 328 and the exposed region 329, a position of the first bonding portion 370.

The guide groove 350 may be formed to have a shape for generating a contrast difference. For example, a width (for example, a first length d1) of the guide groove 350 may be formed to have a specified length (for example, 1 mm or less). The first length d1 may be a length (for example, a second length d2) of the shade forming surface 340b of the sidewall cover 340 in the third direction. A depth (for example, the second length d2) of the guide groove 350 may be formed to have a specified length (for example, 1 mm or less). The second length d2 may be a length between the second surface 340a and the shade forming surface 340b of the sidewall cover 340. A width (for example, a third length d3) of the guide groove 350 may be formed to have a specified length (for example, 0.5 mm or more). The third length d3 may be a length of the shade forming surface 340b of the sidewall cover 340 in a fourth direction (for example, a Y-axis direction).

The guide groove 350 may be provided as a plurality of guide grooves 350. For example, the guide groove 350 may include a first guide groove 351, a second guide groove 352, and a third guide groove 353, spaced apart from each other. The plurality of guide grooves 351, 352, and 353 may be arranged in the third direction (for example, the X-axis direction). The plurality of guide grooves 350 may be provided, thereby increasing positional accuracy of the first bonding portion 370. The number of guide grooves 350 may be selectively designed.

The first bonding portion 370 may be provided as a plurality of first bonding portions 370. For example, the first bonding portion 370 may include a plurality of first bonding portions 371 and 372, spaced apart from each other with respect to the guide groove 350 and/or the guide region 328. The guide region 328 may be positioned between the plurality of first bonding portions 371 and 372. The number of first bonding portions 370 may be selectively designed.

The battery module 200 may receive pressure from a pressurizing device positioned in the first direction (+Z-direction) with respect to the module cover 302. For example, the battery module 200 may receive pressure from a pressurizing device positioned in the first direction (+Z-direction) with respect to the module cover 302 in a state of being supported by a support (for example, an assembly jig) positioned in the second direction (-Z-direction) with respect to the accommodating portion 301. A distance between the module cover 302 and the sidewall 320 may be reduced by the pressurizing device. For example, the first bonding portion 370 may be formed on the sidewall cover 340 and the sidewall 320 in a state in which the distance between the sidewall cover 340 and the sidewall 320 of the module cover 302 is reduced. The distance between the module cover 302 and the sidewall 320, being reduced, may improve durability of the battery module 200.

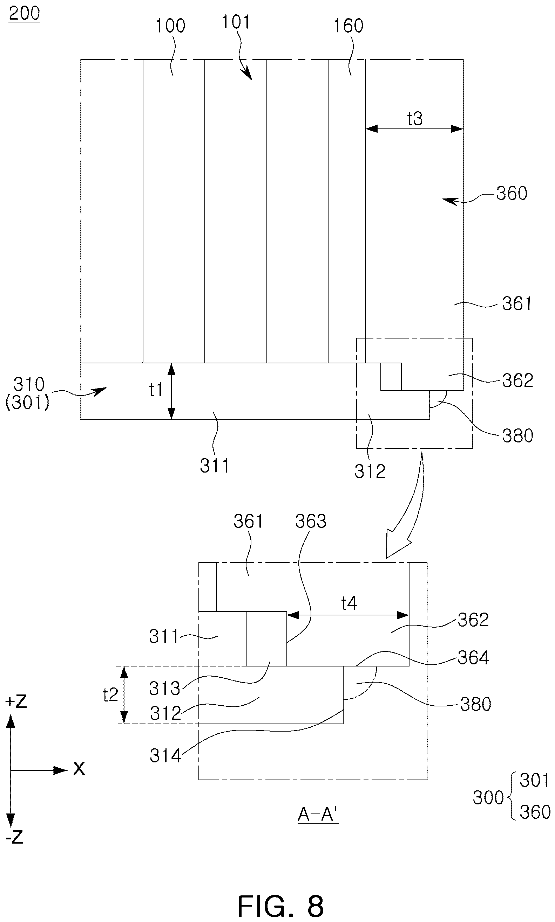

FIG. 8 is a cross-sectional view taken along line A-A' of FIG. 2 according to an embodiment.

Referring to FIG. 8, the battery module 200 may include a cell assembly 101 and a module case 300 accommodating the cell assembly 101. The module case 300 may include a main plate 310 and an end plate 360.

At least a portion of the descriptions of the cell assembly 101, the module case 300, the main plate 310, and the end plate 360 of FIGS. 2, 3, and/or 4 may be applied to the cell assembly 101, the module case 300, the main plate 310, and the end plate 360 of FIG. 8.

The cell assembly 101 may include a plurality of battery cells (for example, the battery cell 100 of FIG. 1). The cell assembly 101 may include an insulating member 160 for preventing contact between the battery cell 100 and the end plate 360.

The module case 300 may include a second bonding portion 380 connecting the main plate 310 and the end plate 360 of the accommodation portion 301 to each other. The end plate 360 may be fixed to the main plate 310 by the second bonding portion 380.

The module case 300 may have a shape for preventing damage by the second bonding portion 380. The main plate 310 and the end plate 360 may have a step structure. For example, the main plate 310 may include a first central portion 311 formed to have a first thickness t1, and a first end portion 312 extending from the first central portion, the first end portion 312 formed to have a second thickness t2, less than the first thickness t1. The end plate 360 may include a second central portion 361 formed to have a third thickness t3, and a second end portion 362 extending from the second central portion, the second end portion 362 formed to have a fourth thickness t4, less than the third thickness t3. The second bonding portion 380 may connect the first end portion 312 of the main plate 310 and the second end portion 362 of the end plate 360 to each other.

The second bonding portion 380 may be formed in a welding direction WD, inclined with respect to the first end portion 312 of the main plate 310 and the second end portion 362 of the end plate 360. For example, the first end portion 312 may have a first internal surface 313 having at least a portion opposing the second central portion 361, and a first bonding surface 314 perpendicular to the first internal surface 313. The second end portion 362 may have a second internal surface 363 opposing the first central portion 311, and a second bonding surface 364. The second bonding surface 364 may be perpendicular to the second internal surface 363 and the first bonding surface 314. The second bonding portion 380 may connect the first bonding surface 314 and the second bonding surface 364 to each other. The second bonding portion 380 may be formed in a welding direction WD, inclined to the first bonding surface 314 and the second bonding surface 364. For example, the welding direction WD may be inclined by about 45 degrees with respect to the first bonding surface 314 and the second bonding surface 364. The second bonding portion 380 may be formed by melting and hardening a contact surface between the first bonding surface 314 and the second bonding surface 364 in the welding direction WD.

The second bonding portion 380 may be disposed on the first bonding surface 314 of the main plate 310 and the second bonding surface 364 of the end plate 360, thereby preventing damage to the battery cell 100 and other portions (for example, the central portion 311 and 361) of the module case 300 due to heat and/or laser generated during welding. For example, each of the main plate 310 and the end plate 360 may have a step structure, and the second bonding portion 380 may be inclinedly transferred with respect to the bonding surfaces 314 and 364, thereby preventing heat transfer to an unintended portion. In an embodiment, the second bonding portion 380 may be referred to as a second welding line or a second welding bead.

The battery module 200 may receive pressure from a pressurizing device positioned in a first direction (+Z-direction) with respect to the end plate 360. For example, the battery module 200 may receive pressure from a pressurizing device positioned in the first direction (+Z-direction) with respect to the end plate 360 in a state of being supported by a support (for example, an assembly jig) positioned in the second direction (-Z-direction) with respect to the main plate 310. A distance between the main plate 310 and the end plate 360 may be reduced by the pressurizing device. For example, the second bonding portion 380 may be formed on the main plate 310 and the end plate 360 in a state in which the distance between the main plate 310 and the end plate 360 of the accommodation portion 301 is reduced. The distance between the main plate 310 and the end plate 360, being reduced, may improve durability of the battery module 200.

In the present disclosure, it is illustrated that the main plate 310 and the end plate 360 have a step structure, and the second bonding portion 380 connects the main plate 310 and the end plate 360 having the step structure to each other, but a step structure of the module case 300 is not limited to the main plate 310 and the end plate 360. For example, the step structures of the main plate 310 and the end plate 360 may be applied to other components of the module case 300. In another embodiment (not illustrated), a third bonding portion (for example, the third bonding portion 390 of FIG. 2) may be connected to an upper plate (for example, the upper plate 330 of FIG. 2) and the end plate 360, having a step structure, to each other. In another embodiment (not illustrated), each of a sidewall (for example, the sidewall 320 of FIG. 2) and the end plate 360 may have the step structure, and the fourth bonding portion (not illustrated) may connect the sidewall 320 and the end plate 360, having a step structure, to each other.

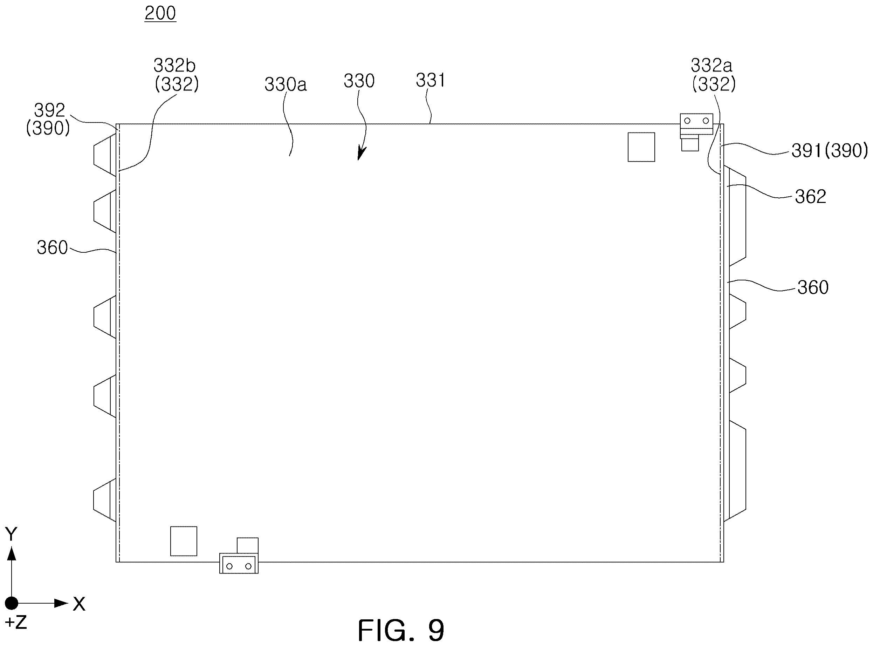

FIG. 9 is a top view of a battery module according to an embodiment.

Referring to FIG. 9, a battery module 200 may include an upper plate 330 and an end plate 360. At least a portion of the descriptions of the battery module 200, the upper plate 330, and the end plate 360 of FIGS. 2, 3, and/or 4 may be applied to the battery module 200, the upper plate 330, and the end plate 360 of FIG. 9.

The module case 300 may include a third bonding portion 390 connecting the upper plate 330 and the end plate 360 to each other. The upper plate 330 may have a substantially rectangular plate shape. For example, the upper plate 330 may include a first end region 331 connected to a sidewall cover (for example, the sidewall cover 340 of FIG. 4), and a second end region 332 perpendicular to the first end region 331. The third bonding portion 390 may connect the second end region 332 of the upper plate 330 and the end plate 360 to each other. In an embodiment, the third bonding portion 390 may be referred to as a third welding line or a third welding bead.

The third bonding portion 390 may connect the upper plate 330 and the end plate 360 to each other at a plurality of points. For example, the upper plate 330 may include a plurality of second end regions 332a and 332b. The plurality of second end regions 332a and 332b may include a second-first end region 332a and a second-second end region 332b, oriented in opposite directions. The third bonding portion 390 may include a third-first bonding portion 391 connecting the second-first end region 332a and the end plate 360 to each other, and a third-second bonding portion 392 connecting the second-second end region 332b and the end plate 360 to each other.

The third bonding portion 390 may be positioned upwardly (for example, in a first direction (+Z-direction) with respect to the upper plate 330 and the end plate 360. For example, the end plate 360 may have a third surface 360a oriented in the first direction (+Z-direction). The bonding portion 390 may connect the third surface 360a of the end plate and the first surface 330a of the upper plate 330 to each other.

The battery module 200 may receive pressure from a pressurizing device positioned in a third direction (X-axis direction) with respect to the end plate 360. For example, the battery module 200 may receive pressure from a pressurizing device and/or a supporting device in contact with the end plates 360. A distance between the end plate 360 and the upper plate 330 of the module cover 302 and a distance between the end plate 360 and the accommodation portion 301 may be reduced by the pressurizing device (or the supporting device). For example, the third bonding portion 390 may be formed on the upper plate 330 and the end plate 360 in a state in which the distance between the upper plate 330 and the end plate 360 is reduced. The distance between the upper plate 330 and the end plate 360, being reduced, may improve durability of the battery module 200.

The third bonding portion 390 may be positioned in the first direction (+Z-direction) with respect to the upper plate 330 and the end plate 360, such that a distance between components (for example, the module case 300 of FIG. 4) of the battery module 200 may be reduced. For example, the third bonding portion 390 may be formed independently of a first bonding portion (for example, the first bonding portion 370 of FIG. 6) or a second bonding portion (for example, the second bonding portion 380 of FIG. 8) .

The third bonding portion 390 may be formed on components (for example, the upper plate 330 and the end plate 360) pressed in the third direction (X-axis direction). The first bonding portion 370 may be formed on components (for example, the module cover 302 and the sidewall 320) pressed in a second direction (for example, the -Z-direction of FIG. 4), perpendicular to the third direction (X-axis direction). The second bonding portion 380 may be formed on components (for example, the main plate 310 and the end plate 360) pressed in the second direction (for example, the -Z-direction of FIG. 4), perpendicular to the third direction (X-axis direction).

The third bonding portion 390 may be positioned in the first direction (+Z-direction) with respect to the upper plate 330 and the end plate 360, such that a distance between the upper plate 330 and the end plate 360 may be reduced by a pressurizing device in a state in which an distance between the module cover 302 and the sidewall 320 and a distance between the main plate 310 and the end plate 360 are reduced. The distance between the components of the battery module 200 (for example, the module case 300 of FIG. 4) may be reduced, thereby improving durability of the battery module 200.

FIG. 10 is an exploded perspective view of a battery pack according to an embodiment.

Referring to FIG. 10, a battery pack 400 may include a plurality of battery modules 200 and a pack frame 410 accommodating the plurality of battery modules 200. The above descriptions (for example, FIGS. 2 and 3) of the battery module 200 may be applied to the battery module 200 of FIG. 10. For example, the battery module 200 of FIG. 10 may include a module case (for example, the module case 300 of FIG. 4).

The pack frame 410 may accommodate a component (for example, the battery module 200) of the battery pack 400. The pack frame 410 may include a bottom member 411 supporting the battery module 200, a pack cover 412 covering the battery module 200, and a pack sidewall 413 surrounding the bottom member 411 and at least a portion of the pack cover 412. The bottom member 411 may support a case (for example, the module case 300 of FIG. 2) of the battery module 200.

The pack frame 410 may include a partition wall 420 crossing at least some battery modules 200, among the plurality of battery modules 200. For example, an accommodation space of the pack frame 410 may be divided into a plurality of spaces by the partition wall 420. The partition wall 420 may be installed to cross the accommodation space so as to increase the rigidity of the pack frame 410. In an embodiment, the partition wall 420 may include a first partition wall 420a crossing a plurality of battery cells 100, and a plurality of second partition walls 420b substantially perpendicular to the first partition wall 420a.

In an embodiment, the battery pack 400 may include a duct member 430. The duct member 430 may include an exhaust space for providing a path of gas and/or flame discharged from the battery module 200. The duct member 430 may be disposed in the pack frame 410. The duct member 430 may surround at least a portion of the battery module 200. For example, gas and/or flame, generated in a battery cell (for example, the battery cell 100 of FIG. 1) of the battery module 200, may pass through the exhaust space of the duct member 430 and be transferred to the outside of the battery pack 400. In the present disclosure, the duct member 430 may be referred to as an exhaust duct or an exhaust member.

The battery pack 400 may include a battery control unit 490, controlling the battery module 200. The battery control unit 490 may be disposed in the pack frame 410. The battery control unit 490 may include a battery management system (BMS). A configuration of the battery control unit 490 is well known in various forms, such that detailed descriptions thereof are omitted. In an embodiment, the battery control unit 490 may be referred to as a processor.

A structure of the battery pack 400 of FIG. 10 is an example. For example, the number of battery modules 200 included in the battery pack 400, a structure of the pack frame 410, and/or a structure of the duct member 430 may be selectively designed.

Only specific examples of implementations of certain embodiments are described. Variations, improvements and enhancements of the disclosed embodiments and other embodiments may be made based on the disclosure of this patent document. For example, the present disclosure may be implemented by deleting some components from the above-described embodiments, and respective embodiments may be implemented in combination with each other.

## Claims

1. A battery module comprising:
a cell assembly including a plurality of battery cells; and
a module case accommodating the cell assembly,
wherein the module case includes:
an accommodation portion including a main plate supporting the cell assembly and a sidewall extending from the main plate;
a module cover including an upper plate covering the cell assembly, the upper plate having a first surface oriented in a first direction, a sidewall cover extending from the upper plate, the sidewall cover covering a portion of the sidewall, the sidewall cover having a second surface oriented in a second direction opposite to the first direction, and a guide groove formed in the second surface; and
a first bonding portion connecting the second surface of the sidewall cover and the sidewall to each other.

2. The battery module of claim 1, wherein
the sidewall cover has a shade forming surface parallel to the second surface, the shade forming surface forming at least a portion of the guide groove, and
the shade forming surface is spaced apart from the first bonding portion.

3. The battery module of claim 1 or 2,
wherein the sidewall includes:
a guide region formed by the sidewall cover, the guide region having at least a portion exposed through the guide groove; and
an exposed region spaced apart from the guide region, the exposed region not covered by the module cover,
wherein the guide region has a first brightness, and the exposed region has a second brightness different from the first brightness.

4. The battery module of any one of preceding claims, wherein
the first bonding portion includes a plurality of first bonding portions, and
the guide region is disposed between the plurality of first bonding portions.

5. The battery module of any one of preceding claims, wherein a material of the module cover and a material of the accommodation portion are the same.

6. The battery module of claim 1, wherein
the module case includes an end plate covering at least a portion of the cell assembly, the end plate perpendicular to the sidewall,
the main plate includes a first central portion having a first thickness, and a first end portion extending from the first central portion, the first end portion has a second thickness less than the first thickness,
the end plate includes a second central portion has a third thickness, and a second end portion extending from the second central portion, the second end portion has a fourth thickness less than the third thickness, and
the module case includes a second bonding portion connecting the first end portion and the second end portion to each other.

7. The battery module of claim 6, wherein
at least a portion of the first end portion has a first internal surface opposing the second central portion, and a first bonding surface perpendicular to the first internal surface,
the second end portion has a second internal surface opposing the first central portion, and a second bonding surface perpendicular to the second internal surface and the first bonding surface, and
the second bonding portion connects the first bonding surface and the second bonding surface to each other.

8. The battery module of claim 6 or 7, wherein the second bonding portion is formed in a welding direction, inclined with respect to the first bonding surface and the second bonding surface.

9. The battery module of any one of preceding claims, wherein
the upper plate includes a first end region connected to the sidewall cover, and a second end region perpendicular to the first end region, and
the module case includes an end plate covering at least a portion of the cell assembly, the end plate is perpendicular to the sidewall, and a third bonding portion connecting the second end region of the upper plate and the end plate to each other.

10. The battery module of claim 9, wherein
the end plate has a third surface oriented in the first direction, and
the third bonding portion connects the first surface of the upper plate and the third surface of the end plate to each other.

11. The battery module of claim 1, further comprising:
a first bonding portion connecting the second surface of the sidewall cover and the sidewall to each other;
a second bonding portion connecting the main plate and the end plate to each other; and
a third bonding portion connecting the first surface of the upper plate and the third surface of the end plate to each other.

12. The battery module of claim 11, wherein
the module cover includes a guide groove formed in the second surface,
the sidewall cover has a shade forming surface parallel to the second surface, the shade forming surface forming at least a portion of the guide groove, and
the shade forming surface is spaced apart from the first bonding portion.

13. The battery module of claim 11 or 12, wherein
the end plate is perpendicular to the sidewall,
the main plate includes a first central portion having a first thickness, and a first end portion extending from the first central portion, the first end portion has a second thickness less than the first thickness,
the end plate includes a second central portion having a third thickness, and a second end portion extending from the second central portion, the second end portion has a fourth thickness less than the third thickness, and
the second bonding portion connects the first end portion and the second end portion to each other.

14. The battery module of any one of claim 11 to 13, wherein
at least a portion of the first end portion has a first internal surface opposing the second central portion, and a first bonding surface perpendicular to the first internal surface,
the second end portion has a second internal surface opposing the first central portion, and a second bonding surface perpendicular to the second internal surface and the first bonding surface,
the second bonding portion connects the first bonding surface and the second bonding surface to each other.

15. A battery pack comprising:
a plurality of battery modules; and
a pack frame accommodating the plurality of battery modules,
wherein each of the plurality of battery modules includes:
a cell assembly including a plurality of battery cells; and
a module case accommodating the cell assembly, and
the module case includes:
an accommodation portion including a main plate supporting the cell assembly, and a sidewall extending from the main plate;
a module cover including an upper plate covering the cell assembly, the upper plate having a first surface oriented in a first direction, a sidewall cover extending from the upper plate, the sidewall cover covering a portion of the sidewall, the sidewall cover having a second surface oriented in a second direction opposite to the first direction, and a guide groove formed in the second surface; and
a first bonding portion connecting the second surface of the sidewall cover and the sidewall to each other.
